# NEUE EUROPÄISCHE PATENTSCHRIFT

(11) **EP 2 174 106 B2**
(45) Veröffentlichungstag und Bekanntmachung des Hinweises auf die Entscheidung über den Einspruch: **05.10.2016**
(45) Hinweis auf die Patenterteilung: 06.03.2013
(21) Anmeldenummer: 08786158.9
(22) Anmeldetag: 16.07.2008
(51) Int. Cl.: G01L 1/16, G01L 23/10, G01L 23/22

(54) **KRAFTSENSOR**
FORCE SENSOR
CAPTEUR DE FORCE

(30) Priorität: 27.07.2007 AT 46307 U; 02.08.2007 AT 12152007
(43) Veröffentlichungstag der Anmeldung: 14.04.2010
(73) Patentinhaber: Piezocryst Advanced Sensorics GmbH, 8020 Graz (AT)
(72) Erfinder: FRIEDL, Alexander, A-8045 Graz (AT); TURAN, Alparslan, A-8010 Graz (AT)
(74) Vertreter: Babeluk, Michael
(86) Internationale Anmeldenummer: PCT/EP2008/059256
(87) Internationale Veröffentlichungsnummer: WO 2009/016030

(56) Entgegenhaltungen:
- EP-A- 0 316 498
- US-A- 3 358 257
- US-A- 3 566 163
- US-A- 4 524 625
- US-A- 4 686 861
- Press Force Sensor Typ 9343; 08.12.2006
- Quarz 3-Komponenten Kraftmesselement Typ 9367B; 16.11.2006
- 3K PE-Kraftsensor D60/26.5H7D21, Artikelcode 7.110.358; 7.110.362; 16.11.2006 (wie D3)
- Quarz 3-Komponenten Kraftmesselement Typ 9377B; 19.06.2006
- 1-Komponenten Messrad Typ 9294A; 03.05.2006
- Kraftsensoren, Katalog Kistler; 10.2003

## Beschreibung

Die Erfindung betrifft einen Kraftsensor mit einem ersten und einem zweiten Gehäuseteil, die jeweils Gewindebohrungen für die Montage aufweisen und unter Zwischenlage eines ringförmigen Sensorelementes mittels einer in einer zentralen Bohrung der beiden Gehäuseteile angeordneten Spannhülse gegeneinander vorgespannt sind, wobei das Sensorelement zumindest ein ringförmiges piezoelektrisches Messelement und eine ringförmige Ableitelektrode aufweist.

Kraftsensoren dienen zum Messen von Kräften, Drücken, Beschleunigungen, Dehnungen und Momenten und werden dazu zwischen Kraftübertragungsmitteln oder Maschinenteilen eingespannt. In vielen Fällen werden drei, vier oder mehrere Kraftsensoren benötigt, die zwischen einer Kraftaufnahmekonstruktion und einer Basiskonstruktion montiert werden.

So ist beispielsweise aus der WO 2004/070334 A1 ein Messsensor mit einer Vorspannvorrichtung bekannt, welcher aus zwei Gehäuseteilen besteht, die als Adapterteil und Adapterhülse bezeichnet werden. Der Adapterteil weist einstückig eine zentrale Spannhülse auf, die in eine zentrale Bohrung der Adapterhülse ragt und dort mit einer Mutter vorgespannt werden kann. In einer ringförmigen Aufnahme der Adapterhülse ist ein ringförmiger Sensor integriert, wobei die Messkristalle des Sensors in der Adapterhülse zentriert eingelagert und von einer Membran abgedeckt sind. Die Membran ist unter Vorspannung mittels Verschweißung an der Adapterhülse befestigt. Nachteilig bei dieser Konstruktion ist insbesondere die Tatsache, dass die Spannhülse einstückig mit einem Gehäuseteil ausgeführt ist und damit keine freie Materialwahl für die Spannhülse und das Gehäuse getroffen werden kann.

In diesem Zusammenhang ist aus der DE 26 37 952 ein Kraftsensor bekannt geworden, der in einer Ausführungsvariante gemäß Fig. 3 aus einem ersten und einem zweiten Gehäuseteil besteht, zwischen welchen ein ringförmiges Messelement als separater Bauteil eingespannt ist. Die Vorspannung erfolgt mit Hilfe eines rohrförmigen Vorspannelementes mit Außengewinden an beiden Enden, welche jeweils in Innengewinde in einer zentralen Bohrung der beiden Gehäuseteile eingreifen. Der Gehäuseunterteil ist mit einer zentralen Schraube an einer Grundplatte befestigt, der Gehäuseoberteil ist mit Hilfe von Schrauben, die um die zentrale Bohrung des Gehäuseoberteils angeordnet sind, mit einer Kraftaufnahmeplatte verschraubt. Nachteilig bei dieser Konstruktion ist insbesondere die Tatsache, dass beim Zusammenbau des Kraftsensors, d.h. beim Verschrauben der beiden Gehäuseteile unter Zwischenlage des ringförmigen Messelementes, Scherkräfte auf das Messelement ausgeübt werden, welche nachteilig für die Messempfindlichkeit sind.

Aus der US 3,358,257 ist ein Kraftsensor bekannt, der aus einem spülenförmigen Körper mit einer zentralen Bohrung besteht, wobei der Spulenkörper am äußeren Umfang eine Rille aufweist, die zur Aufnahme eines piezoresistiven Dehnmessstreifens dient. Die beiden Enden des Dehnmessstreifens sind mit isolierten Verbindungsleitungen zur Signalableitung versehen. Der Kraftsensor wird mit Hilfe eines Schraubbolzens samt Mutter zwischen flächigen Strukturelementen am Messort eingespannt. Eine gewisse Vorspannung des Kraftsensors erfolgt erst durch die Montage am Messort und kann nicht unabhängig von der Montagebefestigung eingestellt werden. Ein ähnlicher Sachverhalt ergibt sich beim ringförmigen Drucksensor gemäß US 4,525,625, welcher mit einem, eine zentrale Bohrung durchsetzenden Bolzen an der Messstelle befestigt wird.

Aufgabe der vorliegenden Erfindung ist es, ausgehend von den eingangs beschriebenen Kraftsensoren, Verbesserungen vorzuschlagen, die eine freie Materialwahl für das Vorspannelement und die Gehäuseteile zulassen, wobei auf eine einfache Herstellung durch einfache Geometrie der Bauteile geachtet werden soll. Weiters sollen Verbesserungen für die abgedichtete Aufnahme und Zentrierung der Messelemente und Ableitelektroden vorgeschlagen werden.

Diese Aufgabe wird erfindungsgemäß durch die kennzeichnenden Merkmale von Anspruch 1 gelöst.

Der erfindungsgemäße Kraftsensor zeichnet sich durch folgende Vorteile aus:
- freie Materialwahl für die Spannhülse und die beiden Gehäuseteile,
- kein Verdrehen der Gehäuseteile zueinander beim Zusammenbau,
- Reduktion der Materialfestigkeiten auf das jeweils erforderliche Maß,
- verbesserte Anpassung der Sensorteile im Hinblick auf die auftretenden Wärmedehnungen,
- einfache Bearbeitung durch einfache Geometrie der Bauteile des Kraftsensors.

Es kann somit auch eine symmetrische Spannhülse verwendet werden, die auf beiden Seiten ein Außengewinde aufweist, wobei jeweils eine Spannmutter verwendet wird, die sich gegen die jeweilige Schulter im ersten und zweiten Gehäuseteil abstützt.

Die beiden Gehäuseteile sind durch ein rohrförmiges, inneres Dichtelement, welches zwischen der Spannhülse und dem ringförmigen Sensorelement angeordnet ist, sowie durch ein rohrförmiges, äußeres Dichtelement in axialer Richtung elastisch miteinander verbunden, so dass eine abgedichtete, axial flexible Aufnahme für das Sensorelement vorliegt. Der Kraftsensor ist somit membranlos und zeichnet sich durch eine kompakte Bauweise aus.

Gemäß einer Ausführungsvariante der Erfindung sind die beiden Dichtelemente mit den beiden Gehäuseteilen verschweißt und bevorzugt als dünne Rohrfedern oder als Faltenbalge ausgebildet. Derartige Kraftsensoren können auch für Hochtemperaturanwendungen eingesetzt werden.

Gemäß einer weiteren erfindungsgemäßen Ausführungsvariante sind die beiden rohrförmigen Dichtelemente an zumindest einem Gehäuseteil mittels einer O-Ring-Dichtung abgedichtet oder mittels einer dauerelastischen Klebung befestigt.

Die Erfindung wird im Folgenden anhand von Abbildungen näher erläutert. Es zeigen:
- Fig. 1: einen Kraftsensors in einem Längsschnitt zur besseren Erklärung der Erfindung;
- Fig. 2: eine erste Ausführungsvariante eines erfindungsgemäßen Kraftsensors in einem Längsschnitt;
- Fig. 3: und Fig. 4 Varianten eines Details des Kraftsensors gemäß Fig. 2; sowie
- Fig. 5: eine zweite Ausführungsvariante des Kraftsensors gemäß Fig. 2.

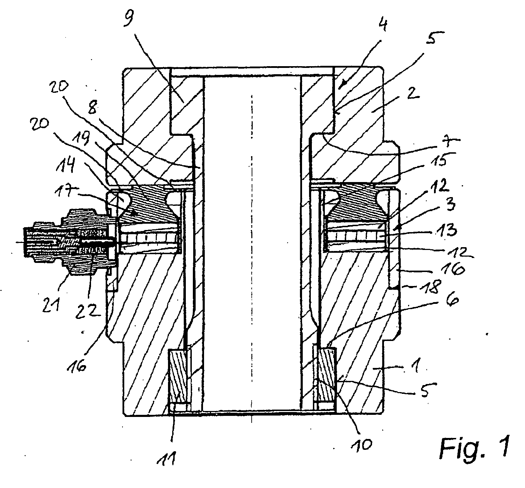

Der Kraftsensor gemäß Fig. 1 weist einen ersten Gehäuseteil 1 und einen zweiten Gehäuseteil 2 auf, die unter Zwischenlage eines ringförmigen Sensorelementes 3 gegeneinander vorgespannt sind. Für die Vorspannung wird eine Spannhülse 4 verwendet, die in einer zentralen Bohrung 5 der beiden Gehäuseteile 1, 2 angeordnet ist, wobei in der zentralen Bohrung 5 beider Gehäuseteile 1, 2 jeweils eine innere Schulter 6, 7 ausgebildet ist, an welcher sich die Spannhülse 4 abstützt. Im dargestellten Beispiel besteht die Spannhülse 4 aus einer hohlen Spannschraube 8, deren Kopf 9 sich an der innen Schulter 7 des zweiten Gehäuseteiles 2 abstützt, wobei am gegenüberliegenden Ende der Spannschraube ein Außengewinde 10 für eine Spannmutter 11 vorgesehen ist, die sich an der inneren Schulter 6 des ersten Gehäuseteiles 1 abstützt. Für die Montage des Kraftsensors sind Gewindebohrungen (nicht dargestellt) in den Gehäuseteilen 1, 2 vorgesehen.

Das Sensorelement 3 gemäß Fig. 1 weist zwei ringförmige, piezoelektrische Messelemente 12 und eine dazwischen liegende ringförmige Ableitelektrode 13 auf, die in einer Aufnahme 14 des Gehäuseteils 1 angeordnet sind. Die Aufnahme 14 ist innen von einer zylindrischen Gehäusewand 15, außen von einem ringförmige Mantelelement 16 und im Kontaktbereich zum Gehäuseteil 2 von einem Membranelement 17 begrenzt. Das Mantelelement 17 ist beispielsweise durch eine Schweißnaht 18 mit dem Gehäuse 1 verbunden.

Das Membranelement 17 weist einen Membranstempel 19 auf, der die auf den Kraftsensor einwirkende Kraft vom Gehäuseteil 2 auf das zumindest eine piezoelektrische Messelement 12 überträgt, wobei ein dünner Membranflansch 20 innen mit der zylindrischen Gehäusewand 15 und außen mit dem ringförmigen Mantelelement 16 verschweißt ist und die Aufnahme 14 nach außen abdichtet.

Das ringförmige Mantelelement 16 weist gemäß Fig. 1 einen Anschluss 21 für ein Signalkabel 22 auf, welches mit der ringförmigen Ableitelektrode 13 in elektrischem Kontakt steht.

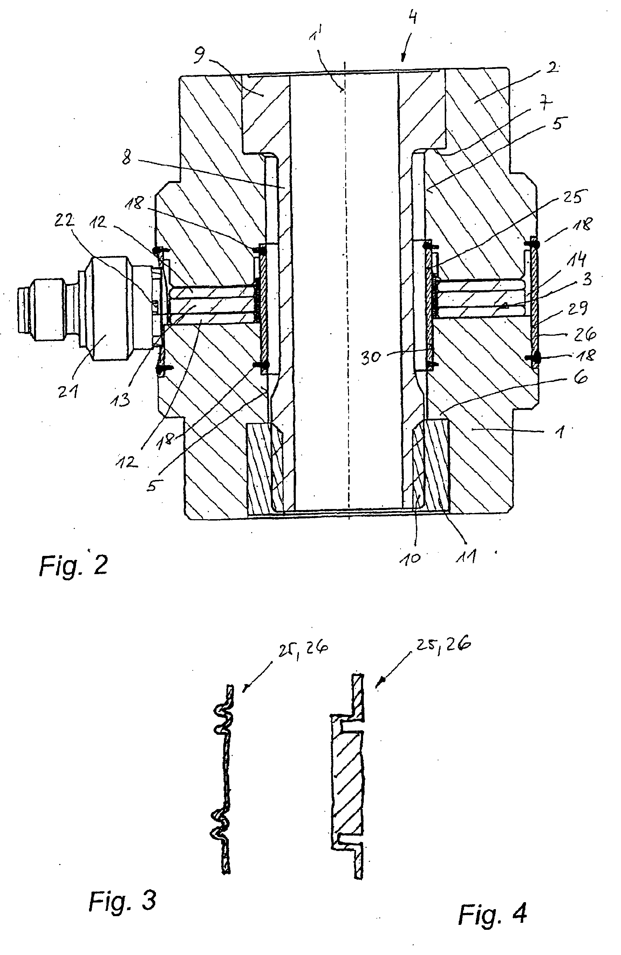

Der erfindungsgemäße Kraftsensor gemäß Fig. 2 weist - wie die Variante von Fig. 1 - einen ersten Gehäuseteil 1 und einen zweiten Gehäuseteil 2 auf, die unter Zwischenlage eines ringförmigen Sensorelementes 3 gegeneinander vorgespannt sind. Für die Vorspannung wird auch hier eine Spannhülse 4 verwendet, die in einer zentralen Bohrung 5 der beiden Gehäuseteile 1, 2 angeordnet ist, wobei in der zentralen Bohrung 5 beider Gehäuseteile 1, 2 jeweils eine innere Schulter 6, 7 ausgebildet ist, an welcher sich die Spannhülse 4 abstützt.

Die beiden Gehäuseteile 1 und 2 sind durch ein rohrförmiges, inneres Dichtelement 25, welches zwischen der Spannhülse 4 und dem ringförmigen Sensorelement 3 angeordnet ist, sowie durch ein rohrförmiges, äußeres Dichtelement 26 in axialer Richtung (in Richtung der Sensorachse 1') elastisch miteinander verbunden. Durch diese Konstruktion liegt eine abgedichtete, axial flexible Aufnahme 14 für das Sensorelement 3 vor.

In der Ausführungsvariante gemäß Fig. 2 ist das innere und das äußere Dichtelement 25, 26 jeweils als dünne Rohrfeder oder als Faltenbalg ausgebildet und mit den beiden Gehäuseteilen 1, 2 an den mit 18 gekennzeichneten Stellen verschweißt. Die Dichtelemente 25, 26 sind jeweils in eine ringförmige Ausnehmung 29, 30 der Gehäuseteile 1, 2 eingepasst, sodass eine möglichst glatte Gehäuseoberfläche entsteht. Für die Montage des Kraftsensors sind Gewindebohrungen (nicht dargestellt) in den Gehäuseteilen 1, 2 vorgesehen.

Beispiele für mögliche Querschnitte der in Richtung der Sensorachse 1' flexiblen Dichtelemente 25, 26 sind in vergrößertem Maßstab in den Fig. 3 und Fig. 4 dargestellt.

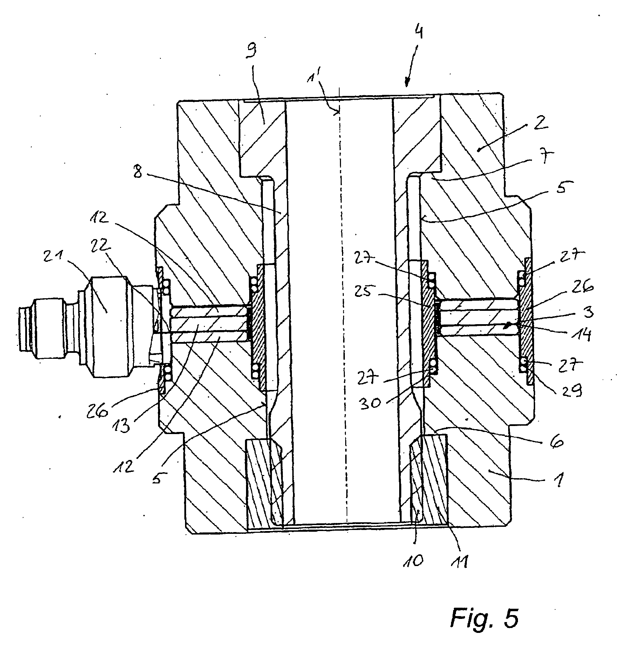

Bei der in Fig. 5 dargestellten Ausführungsvariante sind die beiden Dichtelemente 25, 26 an zumindest einem (bevorzugt an beiden) Gehäuseteilen 1, 2 mittels einer O-Ring-Dichtung 27 abgedichtet. Die Ausnehmungen 29, 30 nehmen bei dieser Ausführungsvariante, die für Niedertemperaturanwendungen gedacht ist, auch die O-Ringe 27 auf.

Es ist auch möglich, an der Innenseite ein Dichtelement 25 in Form einer mit den Gehäuseteilen 1, 2 verschweißten Rohrfeder vorzusehen und an der Außenseite ein Dichtelement 26 einzusetzen, das mit O-Ring-Dichtungen 27 abgedichtet ist.

Weiters kann das innere und das äußere Dichtelement 25, 26 an zumindest einem Gehäuseteil 1, 2 mittels einer dauerelastischen Klebung befestigt sein. Beispielsweise kann die Verbindung eines Dichtelementes 25, 26 zum Gehäuseteil 1 durch Schweißen und zum Gehäuseteil 2 durch eine dauerelastische Klebung hergestellt sein.

Dadurch können die folgenden Vorteile erzielt werden:
- freie Materialwahl für die Spannhülse 4 und die beiden Gehäuseteile 1, 2,
- kein Verdrehen der Gehäuseteile 1, 2 zueinander beim Zusammenbau des Kraftsensors,
- Reduktion der Materialfestigkeiten auf das jeweils erforderliche Maß,
- verbesserte Anpassung der Sensorteile im Hinblick auf die auftretenden Wärmedehnungen,
- einfache Bearbeitung durch einfache Geometrie der Bauteile des Kraftsensors.

Der letzte Punkt trifft insbesondere dann zu, wenn gemäß einer bevorzugten Ausführungsvariante die beiden Gehäuseteile 1, 2 in Bezug auf die Ebene des ringförmigen Sensorelementes 3 spiegelsymmetrisch ausgeführt sind (siehe Fig. 5).

Das Sensorelement 3 bestehend aus einem ringförmigen piezoelektrischen Messelement 12 und zwei ringförmigen Ableitelektroden 13 ist in der axial flexiblen Aufnahme 14 zwischen den beiden Gehäuseteilen 1, 2 angeordnet.

Das äußere Dichtelement 26 weist gemäß Fig. 2 und Fig. 5 einen Anschluss 21 für ein Signalkabel 22 auf, welches mit der ringförmigen Ableitelektrode 13 in elektrischem Kontakt steht.

## Patentansprüche

1. Kraftsensor mit einem ersten und einem zweiten Gehäuseteil (1, 2), die jeweils Gewindebohrungen für die Montage aufweisen und unter Zwischenlage eines ringförmigen Sensorelementes (3) mittels einer in einer zentralen Bohrung (5) der beiden Gehäuseteile (1, 2) angeordneten Spannhülse (4) gegeneinander vorgespannt sind, wobei das Sensorelement (3) zumindest ein ringförmiges piezoelektrisches Messelement (12) und eine ringförmige Ableitelektrode (13) aufweist, **dadurch gekennzeichnet, dass** in den zentralen Bohrungen (5) beider Gehäuseteile (1, 2) jeweils eine innere Schulter (6, 7) ausgebildet ist, an welchen Schultern (6, 7) sich die Spannhülse (4) abstützt, sowie dass die Spannhülse (4) aus einer hohlen Spannschraube (8) besteht, deren Kopf (9) oder Spannmutter an einem Ende der Spannhülse sich an der inneren Schulter (7) eines Gehäuseteils (2) und deren Spannmutter (11) am anderen Ende der Spannhülse sich an der inneren Schulter (6) des anderen Gehäuseteils (1) abstützt, wobei die beiden Gehäuseteile (1, 2) durch ein rohrförmiges, inneres Dichtelement (25), welches zwischen der Spannhülse (4) und dem ringförmigen Sensorelement (3) angeordnet ist, sowie durch ein rohrförmiges, äußeres Dichtelement (26) in axialer Richtung elastisch miteinander verbunden sind, so dass eine abgedichtete, axial flexible Aufnahme (14) für das Sensorelement (3) vorliegt.

2. Kraftsensor nach Anspruch 1, **dadurch gekennzeichnet, dass** die beiden rohrförmigen Dichtelemente (25, 26) mit den beiden Gehäuseteilen (1, 2) verschweißt sind.

3. Kraftsensor nach Anspruch 2, **dadurch gekennzeichnet, dass** die beiden Dichtelemente (25, 26) als dünne Rohrfedern oder als Faltenbalge ausgebildet sind.

4. Kraftsensor nach Anspruch 1, **dadurch gekennzeichnet, dass** die beiden rohrförmigen Dichtelemente (25, 26) an zumindest einem Gehäuseteil (1, 2) mittels einer O-Ring-Dichtung (27) abgedichtet sind.

5. Kraftsensor nach Anspruch 1, **dadurch gekennzeichnet, dass** die beiden rohrförmigen Dichtelemente (25, 26) an zumindest einem Gehäuseteil (1, 2) mittels einer dauerelastischen Klebung befestigt sind.

6. Kraftsensor nach einem der Ansprüche 1 bis 5, **dadurch gekennzeichnet, dass** das piezoelektrisches Messelement (12) und die ringförmige Ableitelektrode (13) in der durch die beiden rohrförmigen Dichtelemente (25, 26) gebildeten, axial flexiblen Aufnahme (14) zwischen den beiden Gehäuseteilen (1, 2) angeordnet sind.

7. Kraftsensor nach einem der Ansprüche 1 bis 6, **dadurch gekennzeichnet, dass** die beiden Gehäuseteile (1, 2) in Bezug auf die Ebene des ringförmigen Sensorelementes (3) spiegelsymmetrisch ausgeführt sind.

8. Kraftsensor nach Anspruch 1, **dadurch gekennzeichnet, dass** das äußere Dichtelement (26) einen Anschluss (21) für ein Signalkabel (22) aufweist, welches mit der ringförmigen Ableitelektrode (13) des Sensorelementes (13) in elektrischem Kontakt steht.

## Claims

1. A force sensor, comprising a first and a second housing part (1, 2), which respectively comprise threaded boreholes for mounting and are pretensioned against each other by means of a clamping sleeve (4) arranged in a central borehole (5) of the two housing parts (1, 2) by interposing an annular sensor element (3), wherein the sensor element (3) comprises at least one annular piezoelectric measuring element (12) and an annular bleeder electrode (13), **characterised in that** one respective inner shoulder (6, 7) is arranged in the central boreholes (5) of both housing parts (1, 2), with the clamping sleeve (4) resting on said shoulders (6, 7), and that the clamping sleeve (4) consists of a hollow clamping screw (8), whose head (9) or tensioning nut rests at one end of the clamping sleeve on the inner shoulder (7) of a housing part (2) and whose tensioning nut (11) rests at the other end of the clamping sleeve on the inner shoulder (6) of the other housing part (1), wherein the two housing parts (1, 2) are elastically connected to each other in the axial direction by a tubular inner sealing element (25) which is arranged between the clamping sleeve (4) and the annular sensor element (3) and by a tubular outer sealing element (26), so that a sealed, axially flexible receiver (14) for the sensor element (3) is provided.

2. A force sensor according to claim 1, **characterised in that** the two tubular sealing elements (25, 26) are welded together with the two housing parts (1, 2).

3. A force sensor according to claim 2, **characterised in that** the two sealing elements (25, 26) are arranged as thin Bourdon springs or as bellows.

4. A force sensor according to claim 1, **characterised in that** the two tubular sealing elements (25, 26) are sealed on at least one housing part (1, 2) by means of an O-ring seal (27).

5. A force sensor according to claim 1, **characterised in that** the two tubular sealing elements (25, 26) are fixed to at least one housing part (1, 2) by means of permanently elastic gluing.

6. A force sensor according to one of the claims 1 to 5, **characterised in that** the piezoelectric measuring element (12) and the annular bleeder electrode (13) are arranged in the axially flexible receiver (14) between the two housing parts (1, 2), said receiver being formed by the two tubular sealing elements (25, 26).

7. A force sensor according to one of the claims 1 to 6, **characterised in that** the two housing parts (1, 2) are arranged in a mirror-symmetrical way with respect to the plane of the annular sensor element (3).

8. A force sensor according to claim 1, **characterised in that** the outer sealing element (26) comprises a connection (21) for a signal cable (22) which is in electrical contact with the annular bleeder electrode (13) of the sensor element (3).

## Revendications

1. Capteur de force comprenant une première et une seconde partie de boitier (1, 2) qui présentent respectivement des perçages filetés pour le montage, et sont précontraintes l'une contre l'autre au moyen d'un manchon de serrage (4) positionné dans un perçage central (5) de ces deux parties de boitier (1, 2), avec interposition d'un élément de capteur annulaire (3) cet élément de capteur (3) comprenant au moins un élément de mesure piézoélectrique annulaire (12) et une électrode de décharge annulaire (13),
**caractérisé en ce que**
dans les perçages centraux (5) des deux parties de boitier (1, 2) est respectivement réalisé un épaulement interne (6, 7) sur lequel s'appuie le manchon de serrage (4), et le manchon de serrage (4) est constitué par une vis de serrage creuse (8) dont la tête (9) ou l'écrou s'appuie, à l'une des extrémités du manchon de serrage contre l'épaulement interne (7) d'une partie de boitier (2), et dont l'écrou de serrage (11) s'appuie, à l'autre extrémité du manchon de serrage contre l'épaulement interne (6) de l'autre partie de boitier (1),
les deux parties de boitier (1, 2) étant reliées élastiquement l'une à l'autre en direction axiale par un élément d'étanchéité tubulaire interne (25) qui est monté entre le manchon de serrage (4) et l'élément de capteur annulaire (3) et par un élément d'étanchéité annulaire externe (26), de façon à définir un logement axial flexible (14) rendu étanche pour l'élément de capteur (3).

2. Capteur de force conforme à la revendication 1,
**caractérisé en ce que**
les deux éléments d'étanchéité tubulaires (25, 26) sont soudés aux deux parties de boitier (1, 2).

3. Capteur de force conforme à la revendication 2,
**caractérisé en ce que**
les deux éléments d'étanchéité (25, 26) sont réalisés sous la forme de tubes ressorts minces ou de soufflets.

4. Capteur de force conforme à la revendication 1,
**caractérisé en ce que**
les deux éléments d'étanchéité tubulaires (25, 26) sont rendus étanches sur au moins l'une des deux parties de boitier (1, 2) au moyen d'un élément d'étanchéité torique (27).

5. Capteur de force conforme à la revendication 1,
**caractérisé en ce que**
les deux éléments d'étanchéité tubulaires (25, 26) sont fixés à au moins l'une des parties de boitier (1, 2) au moyen d'une colle à élasticité permanente.

6. Capteur de force conforme à l'une des revendications 1 à 5,
**caractérisé en ce que**
l'élément de mesure piézoélectrique (12) et l'électrode de décharge annulaire (13) sont montés dans le logement axial flexible (14) formé par les deux éléments d'étanchéité tubulaires (25, 26) entre les deux parties de boitier (1, 2).

7. Capteur de force conforme à l'une des revendications 1 à 6,
**caractérisé en ce que**
les deux parties de boitier (1, 2) sont réalisées avec une symétrie de miroir par rapport au plan de l'élément de capteur annulaire (3).

8. Capteur de force conforme à la revendication 1,
**caractérisé en ce que**
l'élément d'étanchéité externe (26) comporte un raccord (21) pour un câble de signal (22) qui est en contact électrique avec l'électrode de décharge annulaire (13) de l'élément de capteur (3).
